# EUROPEAN PATENT APPLICATION

(11) **EP 1 901 377 A1**
(43) Date of publication of application: **19.03.2008**
(21) Application number: 06254561.1
(22) Date of filing: 31.08.2006
(51) Int. Cl.: H01M 4/72

(54) **An electrode**

(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

A multi-directional multiplexing radius convergence electrode, specifically provided for an electricity accumulation and discharging device; having individual convergence terminal from each side of the electrode in all directions as a central point to indicate the distribution of a plurality of multi-directional, multiplexing radius conduction structures towards the center of the electrode to achieve consistent amperage of the general I/O and reduce the internal impedance.

## Description

### BACKGROUND OF THE INVENTION

### (a) Field of the Invention

The present invention is related to a multi-directional, multiplexing radius convergence electrode, and more particularly, to one that improves consistent amperage of the general output and reduces internal impedance in the amplified current by the electrode of the electricity accumulation and discharging device or in the charging of large amperage.

### (b) Description of the Prior Art:

The electrode of a conventional electricity accumulation device is generally related to a one-way installation of a single I/O convergence terminal, or a one-way installation of multiple I/O convergence terminals. Wherein the conductors in grill pattern are distributed for the terminal in the one-way installation of the single I/O convergence terminal to converge current, or the conductors in one-way radius pattern are disposed to converge current while the same applies to a one-way electrode of multiplexing I/O convergence terminal.

### SUMMARY OF THE INVENTION

The primary purpose of the present invention is to provide a multi-directional, multiplexing radius convergence electrode. The electrode is specifically provided for an electricity accumulation and discharging device. It includes a plurality of multi-directional, multiplexing conduction structures with individual convergence terminal provided on each side of the electrode in all directions as the center distributed in radius towards the center of the electrode to achieve the consistent amperage of the general I/O of the electricity accumulation and discharging device and to reduce the internal impedance.

### BRIEF DESCRIPTION OF THE DRAWINGS

Fig. 1 is a schematic view showing a multi-directional, multiplexing radius convergence electrode of a first preferred embodiment of the present invention having in both directions respectively provided with an I/O convergence terminal.
Fig. 2 is a side view of the first preferred embodiment of the present invention.
Fig. 3 is a schematic view showing a multi-directional, multiplexing radius convergence electrode of a second preferred embodiment of the present invention having in both directions respectively provided with two I/O convergence terminals.
Fig. 4 is a side view of the second preferred embodiment of the present invention.
Fig. 5 is a schematic view showing a multi-directional, multiplexing radius convergence electrode of a third preferred embodiment of the present invention having in four directions respectively provided with an I/O convergence terminal.
Fig. 6 is a side view of the third preferred embodiment of the present invention.
Fig. 7 is a schematic view showing a multi-directional, multiplexing radius convergence electrode of a fourth preferred embodiment of the present invention having in both directions respectively provided with two I/O convergence terminals.
Fig. 8 is a side view of the fourth preferred embodiment of the present invention.
Fig. 9 is a schematic view showing a fifth preferred embodiment of the present invention applied in a multi-directional, multiplexing radius convergence construction having at its center provided with a through hole and having its outer circumference as an I/O terminal electrode.
Fig. 10 is a side view of the fifth preferred embodiment of the present invention.
Fig. 11 is a schematic view showing a sixth preferred embodiment of the present invention applied in an electrode having a through hole at the center as an I/O terminal and provided with an electrode of multi-directional, multiplexing radius convergence construction.
Fig. 12 is a side view of the sixth preferred embodiment.

### DETAILED DESCRIPTION OF THE PREFERRED EMBODIMENTS

While outputting large current or being charged with input of large current by the conventional electricity accumulation and discharging device, its internal consumption increases accordingly. An electrode in a construction of multi-direction, multiplexing radius convergence of the present invention achieves consistent amperage of the general I/O and reduces the internal impedance when the electricity accumulation and discharging device electrode is amplifying its discharging or being charged with large current.

The electrode in the construction of multi-direction, multiplexing radius convergence of the present invention is specifically provided for the electricity accumulation and discharging device. It has the individual convergence terminal from each side of the electrode in all directions as a central point to indicate the distribution of a plurality of multi-directional, multiplexing radius conduction structures towards the center of the electrode to provide consistent amperage of the general I/O and reduce the internal impedance.

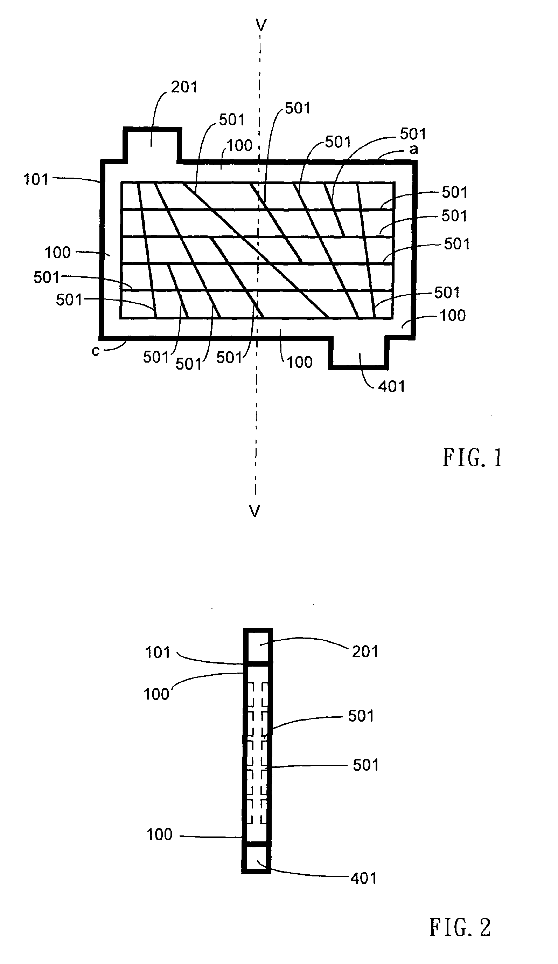

Fig. 1 is schematic view showing a first preferred embodiment, wherein, a multi-directional, multiplexing radius convergence electrode having in both directions respectively provided with an I/O convergence terminal.

Fig. 2 is a side view of the first preferred embodiment.

As illustrated in Figs. 1 and 2 for the first preferred embodiment, four sides of an electrode 101 are provided with a conduction frame 100. On side *a* of the electrode 101, an I/O terminal 201 is disposed along one side of a longitudinal central line *V* of the electrode 101. Another I/O terminal 401 is provided on side c opposite to side *a* diagonal to the I/O terminal 201 on the other side along the central line *V*. Respectively having the I/O terminals 201, 401 as centers, multiple conduction structures 501 are distributed in a mesh pattern on the electrode 101 and diffusing in radius towards their opposite sides.

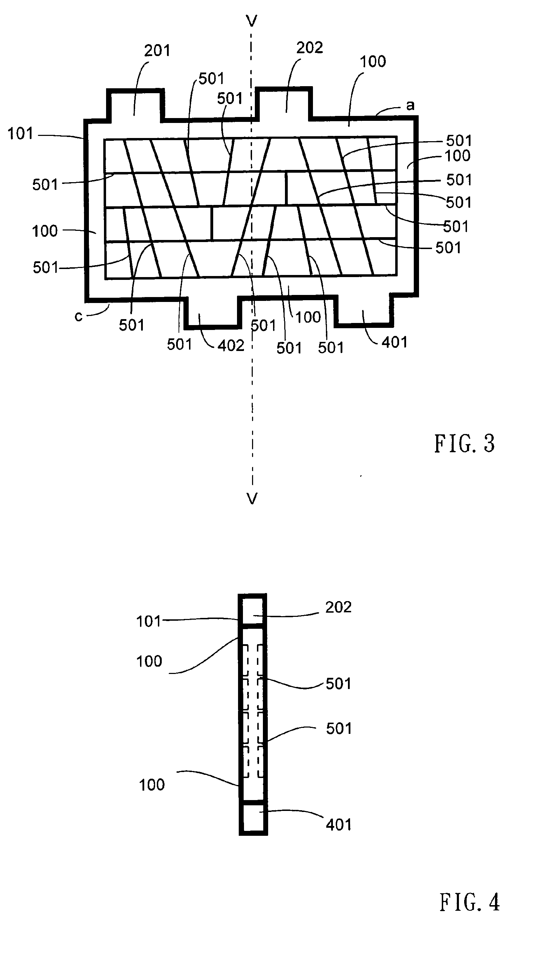

Fig. 3 is a schematic view showing a multi-directional, multiplexing radius convergence electrode of a second preferred embodiment of the present invention having in both directions respectively provided with two I/O convergence terminals.

Fig. 4 is a side view of the second preferred embodiment of the present invention.

As illustrated in Figs. 3 and 4 for the second preferred embodiment of the present invention, four sides of the electrode 101 are provided with the conduction frame 100. On side *a* of the electrode 101, two I/O terminals 201, 202 are respectively disposed on both sides along the longitudinal central line *V* of the electrode 101. Two I/O terminals 401, 402 are provided on side c opposite to side α respectively diagonal to both I/O terminals 201, 202 on both sides along the central line *V.* Respectively having both I/O terminals 201, 202, and both terminals 401, 402 as centers, multiple conduction structures 501 are distributed in a mesh pattern on the electrode 101 and diffusing in radius towards their opposite sides.

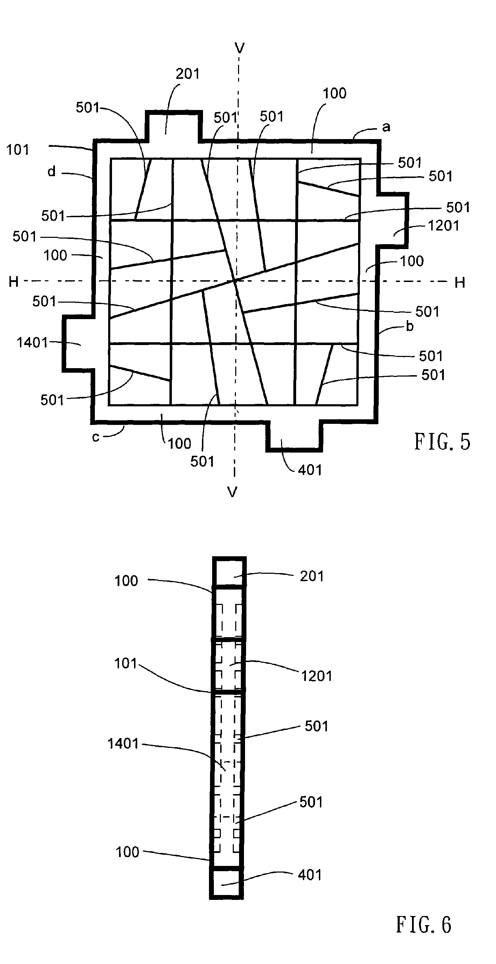

Fig. 5 is a schematic view showing a multi-directional, multiplexing radius convergence electrode of a third preferred embodiment of the present invention having in four directions respectively provided with an I/O convergence terminal.

Fig. 6 is a side view of the third preferred embodiment of the present invention.

As illustrated in Figs. 5 and 6 for the third preferred embodiment of the present invention, four sides of an electrode 101 are provided with a conduction frame 100. On side *a* of the electrode 101, an I/O terminal 201 is disposed along one side of a longitudinal central line *V* of the electrode 101. Another I/O terminal 401 is provided on side c opposite to side *a* diagonal to the I/O terminal 201 on the other side along the central line *V.* Respectively having the I/O terminals 201, 401 as centers, multiple conduction structures 501 are distributed in a mesh pattern on the electrode 101 and diffusing in radius towards their opposite sides.

Meanwhile, on side *b* of the electrode 101, an I/O terminal 1201 is disposed along one side of a horizontal central line *H* of the electrode 101. Another I/O terminal 1401 is provided on side *d* opposite to side *b* diagonal to the I/O terminal 1201 on the other side along the central line *H*. Respectively having the I/O terminals 1201, 1401 as centers, multiple conduction structures 501 are distributed in a mesh pattern on the electrode 101 and diffusing in radius towards their opposite sides.

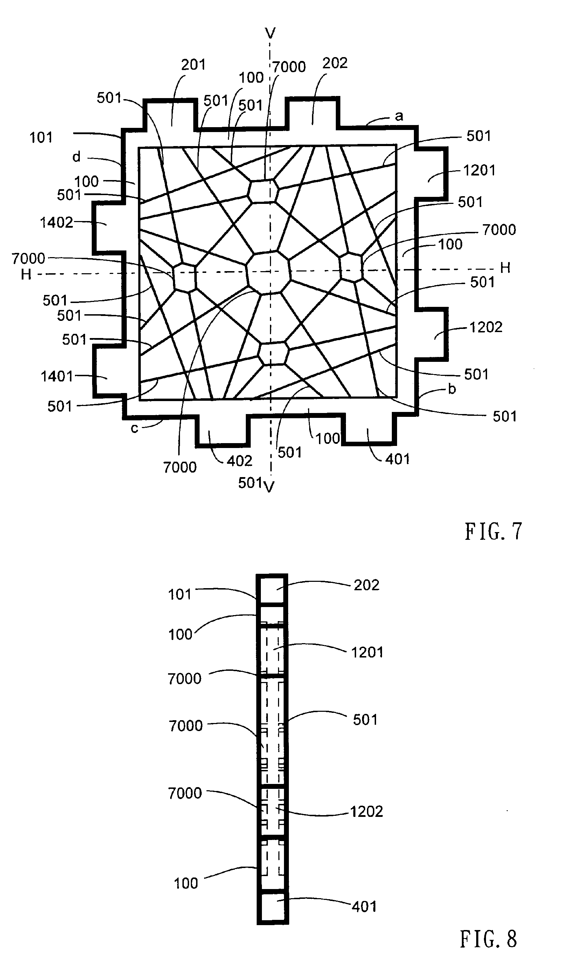

Fig. 7 is a schematic view showing a multi-directional, multiplexing radius convergence electrode of a fourth preferred embodiment of the present invention having in both directions respectively provided with two I/O convergence terminals.

Fig. 8 is a side view of the fourth preferred embodiment of the present invention.

As illustrated in Figs. 7 and 8 for the fourth preferred embodiment of the present invention, four sides of the electrode 101 are provided with the conduction frame 100. On side *a* of the electrode 101, two I/O terminals 201, 202 are respectively disposed on both sides along the longitudinal central line *V* of the electrode 101. Two I/O terminals 401, 402 are provided on side c opposite to side *a* respectively diagonal to both I/O terminals 201, 202 on both sides along the central line *V.* Respectively having both I/O terminals 201, 202, and both terminals 401, 402 as centers, multiple conduction structures 501 are distributed in a mesh pattern on the electrode 101 and diffusing in radius towards their opposite sides.

Meanwhile, on side *b* of the electrode 101, two I/O terminals 1201, 1202 are respectively disposed on both sides along the horizontal central line *H of* the electrode 101. Two I/O terminals 1401, 1402 are provided on side *d* opposite to side b respectively diagonal to both I/O terminals 1201, 1202 on both sides along the central line *H.* Respectively having both I/O terminals 1201, 1202, and both terminals 1401, 1402 as centers, multiple conduction structures 501 are distributed in a mesh pattern on the electrode 101 and diffusing in radius towards their opposite sides.

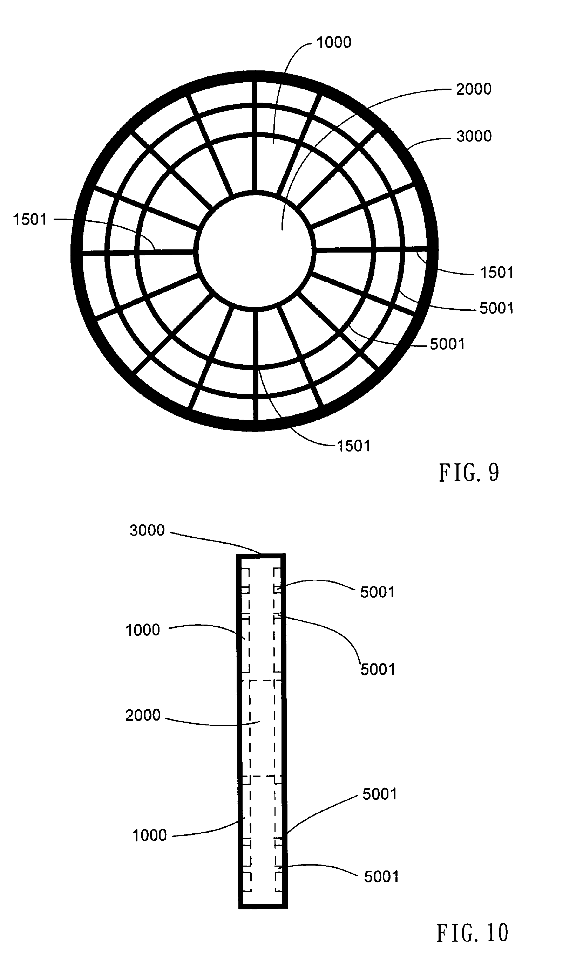

Fig. 9 is a schematic view showing a fifth preferred embodiment of the present invention applied in a multi-directional, multiplexing radius convergence construction having at its center provided with a through hole and having its outer circumference as an I/O terminal electrode.

Fig. 10 is a side view of the fifth preferred embodiment of the present invention.

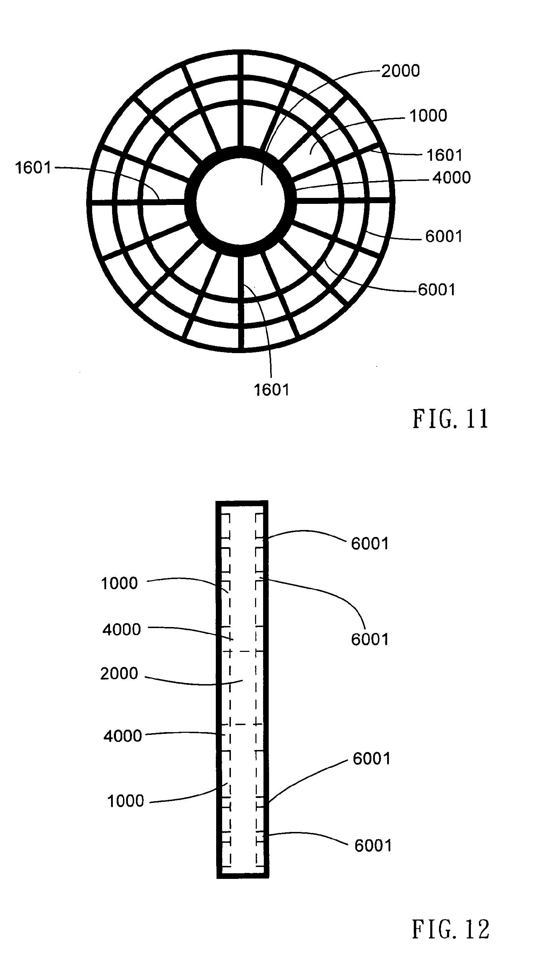

Fig. 11 is a schematic view showing a sixth preferred embodiment of the present invention applied in an electrode having a through hole at the center as an I/O terminal and provided with an electrode of multi-directional, multiplexing radius convergence construction.

Fig. 12 is a side view of the sixth preferred embodiment.

As illustrated in Figs. 9, 10, 11, and 12 for the fifth and the sixth preferred embodiments of the present invention, a circular electrode 1000 is provided at its center a through hole 2000, and the outer diameter respectively of a positive electrode and a negative electrode is not the same as the diameter of the through hole 2000. According to Fig. 9, the electrode is provided in a greater outer diameter and the inner diameter of the through hole is also greater. A conduction frame 3000 is provided on the outer circumference of the electrode 1000 to form the I/O terminal; and multiple conduction structures 1501 are distributed in radius on the electrode with the conduction frame 3000 serving as a convergence I/O terminal. Alternatively, a circular conduction structure 5001 is provided. As illustrated in Fig. 11, the sixth preferred embodiment of the present invention has an electrode in smaller outer diameter and the inner diameter of a through hole 2000 disposed at the center of the electrode 1000 is also smaller. A conduction frame 4000 provided on the circumference of the through hole 2000 constitutes an I/O terminal and multiple conduction structures 1601 are disposed in radius on the electrode having the conduction frame 4000 surrounding the central through hole 2000 as the convergence I/O terminal. As required, multiple optional circular conduction structures 6001 may be provided.

In those preferred embodiments of the multi-directional, multiplexing radius convergence electrode, at where those conduction structures distributed in radius crossing to one another, a loop conduction structure 7000 in oval, polygonal, or any other geometric shape as illustrated in Fig. 7 may be provided to replace the crossing point to avoid forming acute angles for facilitating the attachment of active substance coated and for achieving better conductivity.

The present invention by providing an electrode in a construction of multi-directional, multiplexing convergence in radius specifically for the use by an electricity accumulation device, wherein, the individual convergence terminal being disposed on the side in all directions on the electrode to distribute a plurality of multi-directional, multiplexing conduction structures in radius towards the center of the electrode achieves consistent I/O amperage from the electrode as a whole and reduces internal impedance is innovative with specific functions and has never been disclosed before in the prior arts. Therefore, this application is duly filed accordingly.

## Claims

1. A multi-directional multiplexing radius convergence electrode, is specifically provided for an electricity accumulation and discharging device; having individual convergence terminal from each side of the electrode in all directions as a central point to indicate the distribution of a plurality of multi-directional, multiplexing radius conduction structures towards the center of the electrode to achieve consistent amperage of the general I/O and reduce the internal impedance.

2. A multi-directional multiplexing radius convergence electrode as claimed in Claim 1, wherein, four sides of an electrode 101 are provided with a conduction frame 100; on side *a* of the electrode 101, an I/O terminal 201 being disposed along one side of a longitudinal central line *V* of the electrode 101; another I/O terminal 401 being provided on side c opposite to side *a* diagonal to the I/O terminal 201 on the other side along the central line *V*; and respectively having the I/O terminals 201, 401 as centers, multiple conduction structures 501 being distributed in a mesh pattern on the electrode 101 and diffusing in radius towards their opposite sides.

3. A multi-directional multiplexing radius convergence electrode as claimed in Claim 1, wherein, four sides of the electrode 101 are provided with the conduction frame 100; on side *a* of the electrode 101, two I/O terminals 201, 202 being respectively disposed on both sides along the longitudinal central line V of the electrode 101; two I/O terminals 401, 402 being provided on side c opposite to side *a* respectively diagonal to both I/O terminals 201, 202 on both sides along the central line *V*; and respectively having both I/O terminals 201, 202, and both terminals 401, 402 as centers, multiple conduction structures 501 being distributed in a mesh pattern on the electrode 101 and diffusing in radius towards their opposite sides.

4. A multi-directional multiplexing radius convergence electrode as claimed in Claim 1, wherein, four sides of an electrode 101 are provided with a conduction frame 100; on side *a* of the electrode 101, an I/O terminal 201 being disposed along one side of a longitudinal central line *V* of the electrode 101; another I/O terminal 401 being provided on side c opposite to side *a* diagonal to the I/O terminal 201 on the other side along the central line *V*; respectively having the I/O terminals 201, 401 as centers, multiple conduction structures 501 being distributed in a mesh pattern on the electrode 101 and diffusing in radius towards their opposite sides; on side *b* of the electrode 101, an I/O terminal 1201 being disposed along one side of a horizontal central line *H* of the electrode 101; another I/O terminal 1401 being provided on side *d* opposite to side b diagonal to the I/O terminal 1201 on the other side along the central line *H*; and respectively having the I/O terminals 1201, 1401 as centers, multiple conduction structures 501 being distributed in a mesh pattern on the electrode 101 and diffusing in radius towards their opposite sides.

5. A multi-directional multiplexing radius convergence electrode as claimed in Claim 1, wherein, four sides of the electrode 101 are provided with the conduction frame 100; on side *a* of the electrode 101, two I/O terminals 201, 202 being respectively disposed on both sides along the longitudinal central line *V* of the electrode 101; two I/O terminals 401, 402 being provided on side c opposite to side *a* respectively diagonal to both I/O terminals 201, 202 on both sides along the central line *V*; respectively having both I/O terminals 201, 202, and both terminals 401, 402 as centers, multiple conduction structures 501 being distributed in a mesh pattern on the electrode 101 and diffusing in radius towards their opposite sides; on side *b* of the electrode 101, two I/O terminals 1201, 1202 being respectively disposed on both sides along the horizontal central line *H* of the electrode 101; two I/O terminals 1401, 1402 being provided on side *d* opposite to side b respectively diagonal to both I/O terminals 1201, 1202 on both sides along the central line *H*; and respectively having both I/O terminals 1201, 1202, and both terminals 1401, 1402 as centers, multiple conduction structures 501 being distributed in a mesh pattern on the electrode 101 and diffusing in radius towards their opposite sides.

6. A multi-directional multiplexing radius convergence electrode as claimed in Claim 1, wherein, a circular electrode 1000 is provided at its center a through hole 2000, and the outer diameter respectively of a positive electrode and a negative electrode is not the same as the diameter of the through hole 2000; the electrode being provided in a greater outer diameter and the through hole also being provided in a greater inner diameter; a conduction frame 3000 being provided on the outer circumference of the electrode 1000 to form the I/O terminal; multiple conduction structures 1501 being distributed in radius on the electrode with the conduction frame 3000 serving as a convergence I/O terminal; and a circular conduction structure 5001 being provided; alternatively, an electrode in smaller outer diameter and a through hole 2000 disposed at the center of the electrode 1000 also in smaller inner diameter being provided; a conduction frame 4000 provided on the circumference of the through hole 2000 constituting an I/O terminal and multiple conduction structures 1601 being disposed in radius on the electrode having the conduction frame 4000 surrounding the central through hole 2000 as the convergence I/O terminal; and multiple optional circular conduction structures 6001 being provided.

7. A multi-directional multiplexing radius convergence electrode as claimed in Claim 1, wherein, at where those conduction structures distributed in radius crossing to one another, a loop conduction structure 7000 in oval, polygonal, or any other geometric shape is provided to replace the crossing point to avoid forming acute angles for facilitating the attachment of active substance coated and for achieving better conductivity.

8. An electrode for an accumulator, comprising an electrode body portion and a terminal portion, **characterised in that** the body portion includes a plurality of elongate conductors arranged in a radiating pattern.

9. An electrode according to claim 8, **characterised by** a conductive frame, at least one terminal portion forming part of the frame and, within the frame, at least one group of elongate conductors oriented in a diverging pattern having a respective said terminal portion as an origin of divergence, the group or groups of conductors forming a grid within the frame.

10. An accumulator, **characterised by** an electrode as claimed in any preceding claim.
